# EUROPEAN PATENT APPLICATION

(11) **EP 4 317 619 A1**
(43) Date of publication of application: **07.02.2024**
(21) Application number: 22780699.9
(22) Date of filing: 28.03.2022
(51) Int. Cl.: E02F 9/26, E02F 3/84

(54) **WORK MACHINE DISPLAY CONTROL SYSTEM, WORK MACHINE DISPLAY SYSTEM, WORK MACHINE, WORK MACHINE DISPLAY CONTROL METHOD, AND WORK MACHINE DISPLAY CONTROL PROGRAM**

(30) Priority: 30.03.2021 JP 2021056811
(71) Applicant: Yanmar Holdings Co., Ltd., Osaka-shi, Osaka, 530-0013 (JP)
(72) Inventor: KAGEYAMA, Naoto, Chikugo-shi, Fukuoka 833-0055 (JP); DEGUCHI, Takashi, Chikugo-shi, Fukuoka 833-0055 (JP); KAWAGUCHI, Daisuke, Chikugo-shi, Fukuoka 833-0055 (JP); SUZUKI, Shogo, Osaka-shi, Osaka 530-0013 (JP)
(74) Representative: Dennemeyer & Associates S.A.
(86) International application number: PCT/JP2022/014879
(87) International publication number: WO 2022/210488

(57) **Abstract**

This display control system is used in a work machine comprising a work unit and a drive device. The work unit performs work by driving an attachment attached to a machine body of the work machine. The drive device drives the attachment by supplying motive power thereto. The display control system comprises a display processing unit which displays, on a display device, a first display screen (D11) containing drive information (C1-C3) relating to the drive device.

## Description

### TECHNICAL FIELD

The present invention relates to a work machine display control system, a work machine display system, a work machine, a work machine display control method, and a work machine display control program that are used for displaying information related to the work machine.

### BACKGROUND ART

As a related art, there is known an image display device that simultaneously displays two or more kinds of images on a display device (monitor) provided on a work machine (construction machine) (see Patent Literature 1, for example). The device according to the related art displays, on the display device, a measurement data image of predetermined measuring instruments and a camera image acquired by a camera that is provided for supplementally obtaining a field of view of an outside. Information displayed as the measurement data image includes a cooling-water temperature meter of an engine, a fuel gauge, and a hydraulic-oil temperature meter and the like. Here, in the display device, the measurement data image is superimposed on the camera image, and the camera image is displayed in a see-through state from the measurement data image.

### CITATION LIST

### Patent Literature

Patent Literature 1: JP 2005-163370 A

### DISCLOSURE OF INVENTION

### PROBLEMS TO BE SOLVED BY THE INVENTION

In the related art described above, only the cooling-water temperature meter, the fuel gauge, the hydraulic-oil temperature meter, the camera image and the like are displayed on the display device, and information related to the drive device that drives an attachment by supplying power to the attachment is not particularly displayed. Therefore, for example, it is difficult for some operators, such as operators with a low level of skill, to grasp an operating state of the drive device and the like, and as a result, there is a possibility that the operability of the work machine will deteriorate.

An object of the present invention is to provide a work machine display control system, a work machine display system, a work machine, a work machine display control method, and a work machine display control program that can easily improve operability of the work machine.

### MEANS FOR SOLVING THE PROBLEMS

A work machine display control system according to one aspect of the present invention is used for a work machine including a work unit and a drive device. The work unit performs a work by driving an attachment attached to a machine body of the work machine. The drive device supplies power to the attachment so as to drive the attachment. The work machine display control system includes a display processing unit that causes a display device to display a first display screen including drive information related to the drive device.

A work machine display system according to one aspect of the present invention includes the work machine display control system and the display device that displays the first display screen.

A work machine according to one aspect of the present invention includes the work machine display system and a machine body on which the display device is mounted.

A work machine display control method according to an aspect of the present invention is used for a work machine including a work unit and a drive device and includes causing a display device to display a first display screen including drive information related to the drive device. The work unit performs a work by driving an attachment attached to a machine body of the work machine. The drive device supplies power to the attachment so as to drive the attachment.

A work machine display control program according to one aspect of the present invention is a program used in the work machine including the work unit and the drive device and causing one or more processors to execute displaying of a first display screen including the drive information related to the drive device on the display device. The work unit performs a work by driving an attachment attached to a machine body of the work machine. The drive device supplies power to the attachment so as to drive the attachment.

According to the present invention, a work machine display control system, a work machine display system, a work machine, a work machine display control method, and a work machine display control program that can easily improve operability of the work machine can be provided.

### BRIEF DESCRIPTION OF DRAWINGS

FIG. 1 is a block diagram illustrating a work machine according to an embodiment 1.
FIG. 2 is a schematic appearance view of a display system according to the embodiment 1.
FIG. 3 is a schematic appearance view of an operating device of the work machine according to the embodiment 1.
FIG. 4 is a diagram illustrating an example of a first display screen displayed by a display control system according to the embodiment 1.
FIG. 5 is a diagram illustrating an example of the first display screen displayed by the display control system according to the embodiment 1.
FIG. 6 is a conceptual diagram illustrating a transition state of a setting screen displayed by the display control system according to the embodiment 1.
FIG. 7 is a view illustrating an example of the first display screen displayed by the display control system according to the embodiment 1.
FIG. 8 is a diagram illustrating an example of the first display screen displayed by the display control system according to the embodiment 1.
FIG. 9 is a diagram illustrating an example of the first display screen displayed by the display control system according to the embodiment 1.
FIG. 10 is a diagram illustrating an example of an allocation setting screen displayed by the display control system according to the embodiment 1.
FIG. 11 is a flowchart illustrating one example of processing according to a display control method by the display control system according to the embodiment 1.
FIG. 12 is a block diagram illustrating a display system and a work machine according to an embodiment 2.

### DESCRIPTION OF EMBODIMENTS

Hereinafter, embodiments of the present invention will be described with reference to the attached drawings. The embodiments described below are one example in which the present invention is embodied and are not intended to limit the technical scope of the present invention.

### (Embodiment 1)

### [1] Overall Configuration

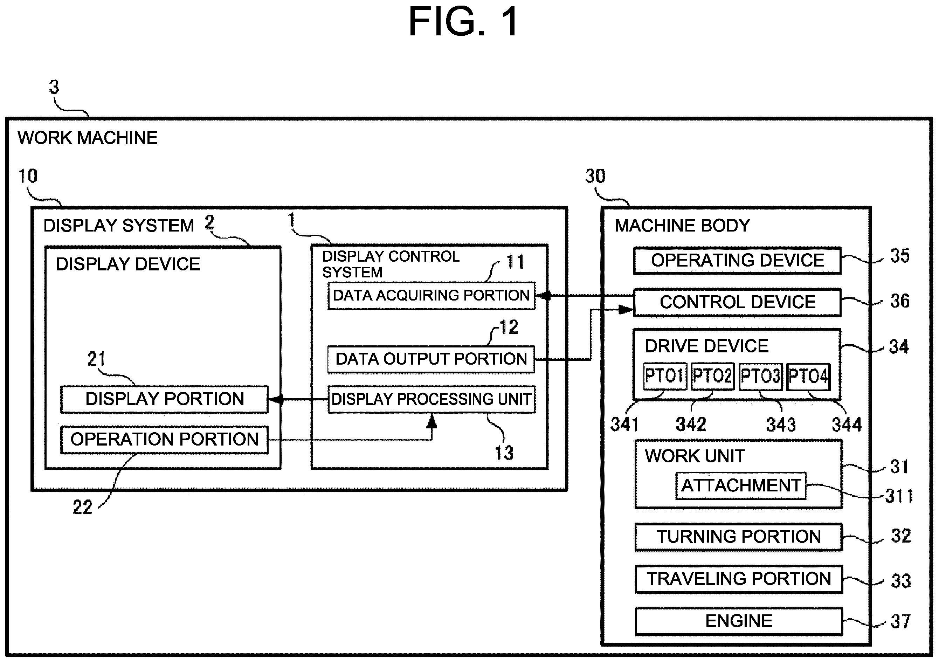

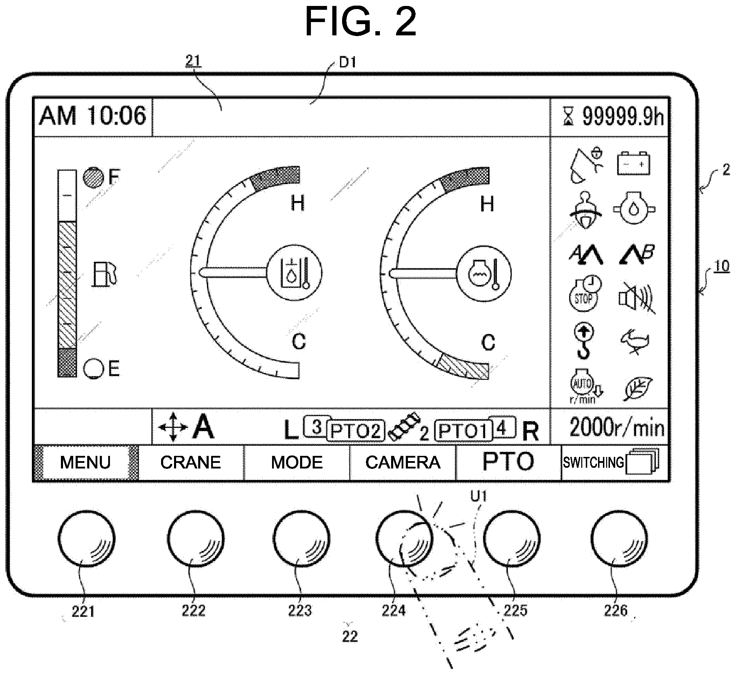

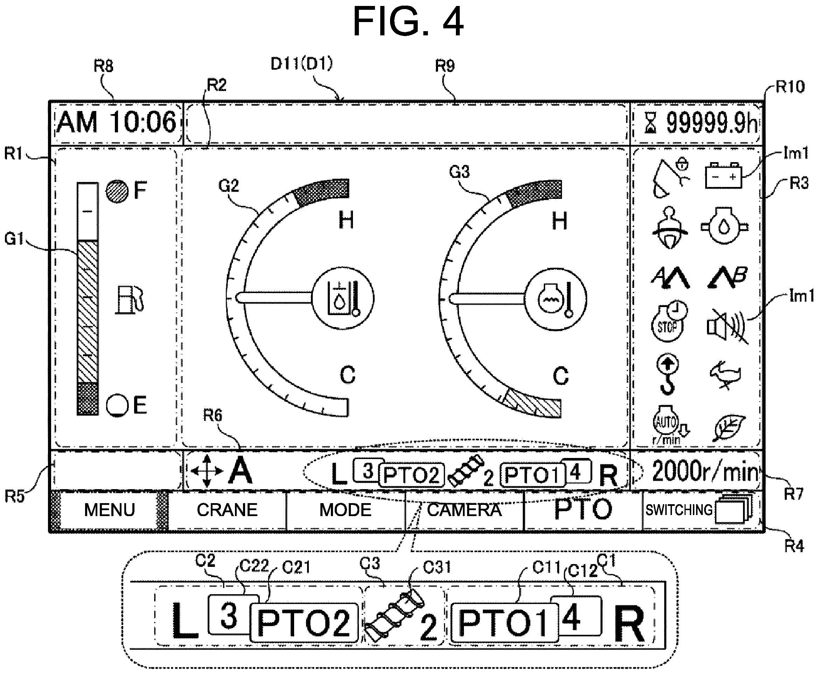

As shown in FIG. 1 and FIG. 2, a work machine display control system 1 according to this embodiment (hereinafter, simply referred to as a "display control system 1") is used for displaying information related to a work machine 3 such as, for example, a back hoe. The display control system 1 causes a display device 2 to display a display screen D1 (see FIG. 2) such as a first display screen D11 (see FIG. 4) and the like by controlling the display device 2. In this embodiment, as one example, the display device 2 is mounted on a machine body 30 of the work machine 3 and presents various types of information by the display screen D1 to a user (operator) who operates the work machine 3. That is, a user who operates the work machine 3 can visually acquire the various types of information related to the work machine 3 by seeing the display screen D1 displayed on the display device 2.

In this embodiment, as shown in FIG. 1, the display control system 1 configures a work machine display system 10 (hereinafter, simply referred to as a "display system 10") along with the display device 2. In other words, the display system 10 according to this embodiment includes the display control system 1 and the display device 2 that displays the first display screen D11. Moreover, in this embodiment, the display system 10 configures the work machine 3 along with the machine body 30. In other words, the work machine 3 according to this embodiment includes the display system 10 and the machine body 30 on which the display device 2 is mounted.

Here, the display system 10 and the machine body 30 are communicable with each other. The term "communicable" in this disclosure means that information (data) can be transmitted and received directly via an appropriate communication system such as wired communication or wireless communication (communication via radio waves or light as medium) or indirectly via a communication network (network), a repeater or the like. The display system 10 and the machine body 30 are communicable with each other by a communication system such as a Controller Area Network (CAN) and the like, for example. Communication means between the display system 10 and the machine body 30 is not limited to the above-described example but is realized by an appropriate communication means. Moreover, it is not an indispensable configuration in the display control system 1 that the display system 10 and the machine body 30 are communicable with each other.

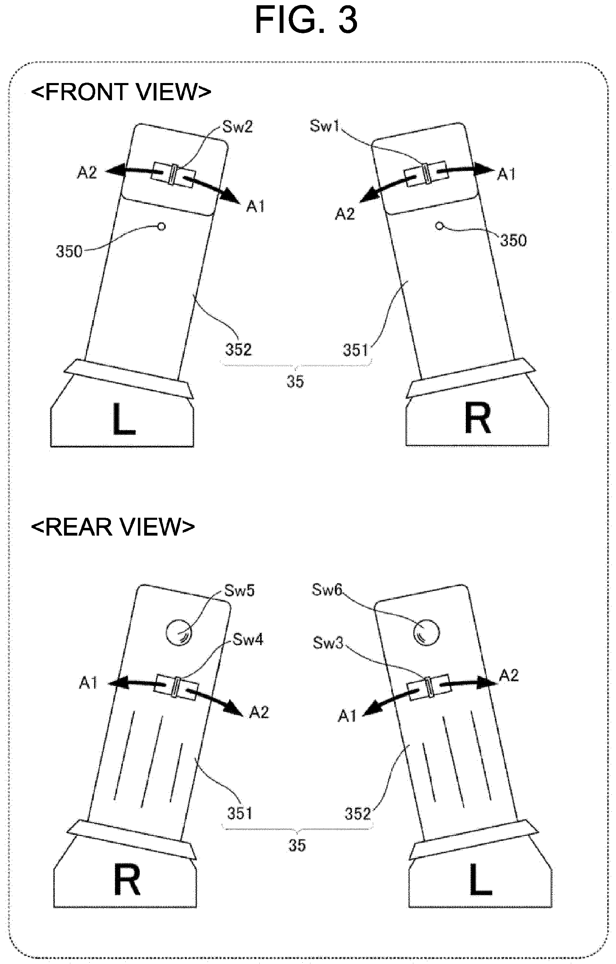

In the work machine 3 that includes the display system 10 as above, when an engine 37 (see FIG. 1) drives a hydraulic pump, and hydraulic oil is supplied from the hydraulic pump to a hydraulic actuator (including a hydraulic cylinder and a hydraulic motor and the like) of each portion of the machine body 30, for example, the machine body 30 is driven. The work machine 3 as above is controlled by the user (operator), who is onboard a driver's cabin of the machine body 30, operating the operating device 35 such as operation levers 351, 352 (see FIG. 3), for example.

Here, the display device 2 is mounted in the driver's cabin of the machine body 30, and the user operates the work machine 3 while seeing the various types of information related to the work machine 3 displayed on the display device 2. As an example, when the information related to an operating state of the work machine 3 such as a cooling water temperature, a hydraulic oil temperature and the like is displayed on the display screen D1 of the display device 2, the user can confirm, on the display device 2, the information related to the operating state of the work machine 3 required for the operation of the work machine 3.

Moreover, the work machine 3 includes a drive device 34 and performs various works by driving the attachment 311 of the work unit 31 by power from the drive device 34. That is, in the work machine 3, the attachment 311 such as a breaker or an auger, for example, is attached to the machine body 30 in accordance with contents of the work and performs the work by driving the attachment 311 through supply of the power from the drive device 34 to the attachment 311. Thus, when the work is performed in the work machine 3, the user (operator) operates the operating device 35, for example, so as to cause the attachment 311 to make a desired motion, whereby an output (power) or the like of the drive device 34 supplied to the attachment 311 is controlled.

In the display control system 1 according to this embodiment, information related to the drive device 34 such as the operating state of the drive device 34 and the like as above can also be displayed on the display screen D1 of the display device 2. As a result, when the user (operator) operates the work machine 3 to perform the work, the user can visually check the operating state of the drive device 34 and the like, and the operability of the work machine 3 is improved. For example, even a low-skilled operator or the like can accurately and smoothly operate the work machine 3 while visually checking the operating state of the drive device 34 and the like and thus, improvement in efficiency of the work using the work machine 3 is also expected.

### [2] Definition

A "work machine" referred to in this disclosure means a machine for various types of works and includes, as an example, a work vehicle such as a back hoe (including a hydraulic excavator, a compact excavator and the like), a wheel loader, a carrier and the like. The work machine 3 is not limited to a "vehicle" and may be, for example, a working ship and a working flying object such as a drone or a multi-copter and the like. Moreover, the work machine 3 is not limited to a construction machine (construction equipment) and may be, for example, an agricultural machine (agricultural equipment) such as a rice trans-planter, a tractor, or a combine harvester, and the like. In this embodiment, unless otherwise noted, there is shown and explained an example in which the work machine 3 is a riding-type back hoe that can perform a work such as an excavation work, a ground leveling work, a groove excavation work or a loading work and the like.

A "screen" such as the display screen D1 and the like referred to in this disclosure means a video (image) displayed by the display device 2 and includes a pictogram, a figure, a photograph, a text, a moving image and the like. That is, the display control system 1 can cause the display device 2 to display the display screen D1 including a pictogram and the like indicating information related to the operating state of the work machine 3 such as a cooling water temperature, a hydraulic oil temperature and the like, for example. Here, when the display screen D1 includes a moving image or the like, the display screen D1 includes not a certain video but a video that is changing at every moment.

### [3] Machine Body

Subsequently, the configuration of the machine body 30 of the work machine 3 will be explained with reference to FIG. 1. The work machine 3 includes a work unit 31, a turning portion 32, and a traveling portion 33 in the machine body 30. In this embodiment, the machine body 30 further includes a drive device 34, an operating device 35, a control device 36, the engine 37 and the like.

The work unit 31 is supported by the turning portion 32 and performs a work. The turning portion 32 is located above the traveling portion 33 and is configured to be turnable around a rotation axis along a vertical direction with respect to the traveling portion 33. The traveling portion 33 is configured to be capable of traveling (including turning) on the ground. In this embodiment, the work machine 3 is assumed to be a riding-type back hoe as described above and thus, the work unit 31 is driven in accordance with an operation by the user (operator) onboard the driver's cabin and performs the work such as excavation work and the like. The driver's cabin (for example, a cabin) on which the user (operator) boards is provided on the turning portion 32.

The work unit 31 includes the attachment 311. The attachment 311 is a tool (work tool) attached to the machine body 30 of the work machine 3 and includes an optional tool selected from a plurality of types of tools in accordance with the content of the work. The attachment 311, as an example, is detachably attached to the machine body 30 and is replaced in accordance with the contents of the work. The attachments 311 for the work machine 3 include various tools such as breakers, augers, crushers, forks, buckets, fork claws, steel cutters, asphalt cutters, mowers, rippers, mulchers, tilt rotators, tampers and the like, for example. The work unit 31 performs the work by driving the attachment 311 by power from the drive device 34.

The work unit 31 further includes a boom, an arm, and a hydraulic actuator (including a hydraulic cylinder, a hydraulic motor and the like) and the like. The attachment 311 is attached to a tip end of the arm. Here, the work unit 31 receives power from the engine 37 as a power source and operates. Specifically, a hydraulic pump is driven by the engine 37, and when the hydraulic pump supplies hydraulic oil to a hydraulic actuator of the work unit 31, the work unit 31 operates.

The drive device 34 is a device for supplying power to the attachment 311. As one example in this embodiment, the drive device 34 includes a device (mechanism) such as a Power take-off (PTO) to take out power from the engine 37 as power for driving the attachment 311 constituted by hydraulic devices. Specifically, the drive device 34 sends out the hydraulic oil from the hydraulic pump driven by the engine 37 to the attachment 311, whereby it is supplied to the attachment 311. Here, the drive device 34 adjusts a flowrate of the hydraulic oil to be supplied to the attachment 311, whereby magnitude of the power supplied to the attachment 311 is adjusted.

Here, the drive device 34 has a plurality of (four as an example in this embodiment) output ports 341 to 344. Each of these plurality of output ports 341 to 344 is configured capable of outputting power. Each of the plurality of output ports 341 to 344 can individually adjust the power, that is, the flowrate of the hydraulic oil, and the drive device 34 outputs the power from each of the plurality of output ports 341 to 344. In this embodiment, each of the plurality of output ports 341 to 344 is a PTO port and thus, the output port 341 may be denoted as "PTO1", the output port 342 as "PTO2", the output port 343 as "PTO3", and the output port 344 as "PTO4".

The turning portion 32 includes a hydraulic motor (hydraulic actuator) for turning and the like. The engine 37 and the like in addition to the driver's cabin are mounted on the turning portion 32. The traveling portion 33 includes, for example, a pair of left and right crawlers, a hydraulic motor (hydraulic actuator) for traveling and the like. Similarly to the work unit 31, each of the turning portion 32 and the traveling portion 33 also receives the power from the engine 37 as a power source and operates. That is, when the hydraulic oil is supplied from the hydraulic pump to the hydraulic actuators (hydraulic motors) of the turning portion 32 and traveling portion 33, the turning portion 32 and the traveling portion 33 operate.

As described above, the engine 37 functions as a power source that supplies power to each portion. In this embodiment, as an example, the engine 37 is a diesel engine. The engine 37 is driven when a fuel (light oil, in this case) is supplied from a fuel tank. The fuel tank includes a residual-amount sensor that senses a residual amount of fuel, and the residual-amount sensor outputs an electric signal (sensor signal) corresponding to the sensed residual amount of fuel.

The operating device 35 is disposed in the driver's cabin of the machine body 30, and is a user interface for accepting an operation input by a user (operator). The operating device 35 outputs an electric signal in response to an operation by the user, for example, and accepts various operations by the user. As one example in this embodiment, the operating device 35 includes a pair of operation levers 351, 352 (see FIG. 3). The operating device 35 will be explained in detail in the column "[5] Operating Device".

The control device 36 is constituted by an electronic control unit (ECU), for example, and controls each portion of the work machine 3. To the control device 36, at least the drive device 34, the operating device 35 and the like are connected. Thus, the control device 36 can monitor the operating state of the drive device 34, the operation input to the operating device 35 and the like.

Moreover, the machine body 30 further includes a communication terminal, a fuel tank, a battery and the like, in addition to the above configuration. Furthermore, the machine body 30 includes sensors (including a camera) to monitor an operating state of the machine body 30 such as a cooling-water temperature sensor, a hydraulic oil temperature sensor, a tachometer that measures a rotation number of the engine 37, an hour meter that measures an operating time, a camera that photographs a periphery of the machine body 30 and the like. In addition, the machine body 30 also includes sensors for detecting states of a cut-off lever, a gate lock lever, a starter key switch and the like or a type of the attachment 311 attached to the work unit 31 and the like.

### [4] Display System

Subsequently, a configuration of the display system 10 will be explained in detail with reference to FIG. 1 and FIG. 2. As described above, the display system 10 includes the display control system 1 and the display device 2. In this embodiment, as one example, it is assumed that the display control system 1 and the display device 2 are accommodated in a single housing, and all functions of the display system 10 are aggregated in the single housing as shown in FIG. 2.

The display system 10 in which the display control system 1 and the display device 2 are aggregated as described above is mounted in the driver's cabin of the machine body 30. As a result, a user (operator) can visually check the display screen D1 displayed on the display device 2 and can operate the display device 2 as necessary.

As shown in FIG. 1 and FIG. 2, the display device 2 includes a display portion 21 and an operation portion 22. The display device 2 is configured to be capable of communicating with the display control system 1 and is capable of transmitting and receiving data to and from the display control system 1. In this embodiment, as one example, the display device 2 is a dedicated device used for the work machine 3.

The display portion 21 is a user interface for presenting information to a user (operator) such as a liquid crystal display or an organic EL display that displays various types of information. The display portion 21 presents the various types of information to the user by displaying. In this embodiment, as one example, the display portion 21 is a full collar liquid crystal display having a back light and, as shown in FIG. 2, includes a "laterally long" display region that is longer in a lateral direction.

The operation portion 22 is a user interface for accepting an operation input by a user (operator) to the display screen D1 displayed on the display portion 21. The operation portion 22 accepts various operations by a user by, for example, outputting an electric signal in accordance with the operation by the user. In this embodiment, as one example, the operation portion 22 includes a plurality of (in this case, 6) mechanical push-button switches 221 to 226 as shown in FIG. 2. The plurality of push-button switches 221 to 226 are disposed close to (in an example shown in FIG. 2, below) the display region of the display portion 21 along a peripheral edge of the display region. The plurality of push-button switches 221 to 226 respectively correspond to items displayed on the display screen D1 described below and, when any one of the plurality of push-button switches 221 to 226 is operated, any one of the items on the display screen D1 is operated (selected).

Moreover, the operation portion 22 may include a touch panel, an operation dial or the like. Also in this case, any one of the items on the display screen D1 is operated (selected) by an operation on the operation portion 22.

As shown in FIG. 1, the display control system 1 includes a data acquiring portion 11, a data output portion 12, and a display processing unit 13. The display control system 1 is configured to be capable of communicating with the machine body 30, and is capable of receiving, for example, drive information related to the drive device 34, an operation state of the operating device 35 and the like from the machine body 30. Here, the display control system 1 may acquire the information (data) directly from the drive device 34, the operating device 35 and the like or via the control device 36 of the machine body 30.

The data acquiring portion 11 periodically or non-periodically acquires, from (the control device 36 of) the machine body 30, various types of data including drive information related to the drive device 34, an operation state of the operating device 35 and the like. That is, the data acquiring portion 11 acquires various types of information (data) including, for example, data indicating the operating state of the drive device 34 and the operation state of the operating device 35. Here, the drive information related to the drive device 34 includes not only the operating state of the drive device 34 but also the operating state of a maintaining function of maintaining the output of the drive device 34, a connection state of the attachment 311 to the drive device 34, the type of the attachment 311 connected to the drive device 34 and the like. Moreover, the data acquiring portion 11 also acquires, from (the control device 36 of) the machine body 30, as the drive information, allocation information or the like indicating a correspondence relationship between a plurality of output ports 341 to 344 in the drive device 34 and a plurality of operators Sw1 to Sw4 (see FIG. 3) in the operating device 35. The data acquired in the data acquiring portion 11 is, for example, stored in a memory or the like.

For example, the data output portion 12 periodically or non-periodically outputs various types of data such as allocation information to (the control device 36 of) the machine body 30. That is, the allocation information or the like indicating the correspondence relationship between the plurality of output ports 341 to 344 and the plurality of operators Sw1 to Sw4 can be arbitrarily set in the display device 2. Thus, the data output portion 12 outputs the data set in the display device 2 to the machine body 30 so that the data is reflected in the machine body 30. The data transmitted (output) from the data output portion 12 to the machine body 30 is stored in, for example, a memory or the like of the control device 36.

The display processing unit 13 is mainly configured by a computer system including one or more processors such as a Central Processing Unit (CPU) and the like and one or more memories such as a Read Only Memory (ROM) and a Random Access Memory (RAM) and the like and executes various types of processing (information processing). The display processing unit 13 has a function of causing the display device 2 to display at least the display screen D1. Specifically, the display processing unit 13 creates the display screen D1 on the basis of data acquired in the data acquiring portion 11 and causes the display screen D1 to be displayed on the display portion 21 of the display device 2 by controlling the display device 2. Moreover, the display processing unit 13 operates in accordance with an operation accepted by the operation portion 22 of the display device 2.

### [5] Operating Device

Subsequently, a configuration of the operating device 35 will be explained in detail with reference to FIG. 3. The operating device 35 includes a pair of operation levers 351, 352 as described above. As shown in the "front view" in FIG. 3, the operation lever 351 is located on the right hand side when seen from the user (operator) onboard the driver's cabin, and the operation lever 352 is located on the left hand side when seen from the user onboard the driver's cabin. Therefore, the user, for example, holds the operation lever 351 with the right hand and the operation lever 352 with the left hand and operates the pair of operation levers 351, 352, thereby causing the work machine 3 to perform various operations such as moving forward, backward and the like.

Here, the operating device 35 has a plurality of (four, here) operators Sw1 to Sw4 corresponding one-to-one to the plurality of output ports 341 to 344 so as to be capable of individually operating the plurality of output ports 341 to 344 of the drive device 34. The operator Sw1 is disposed on the front surface side (front side) of the operation lever 351, and the operator Sw2 is disposed on the front surface side (front side) of the operation lever 352. The operator Sw4 is disposed on the rear surface ide (rear side) of the operation lever 351, and the operator Sw3 is disposed on the rear surface side (back side) of the operation lever 352. That is, in this embodiment, the right-hand side operation lever 351 has the operators Sw1 and Sw4 provided separately to the front and rear surfaces, and the left-hand side operation lever 352 has the operators Sw2 and Sw3 provided separately to the front and rear surfaces. The plurality of operators Sw1 to Sw4 constitute "adjusting operators" that adjust magnitude (flowrate of hydraulic oil) of power output from the drive device 34.

In this embodiment, as an example, each of the plurality of operators Sw1 to Sw4 is constituted by a lever switch that can be operated so as to tilt to right A1 or left A2. In particular, each of the operators Sw1 to Sw4 is a momentary-type switch that has a center in a left-right direction as a neutral position, tilts to the right A1 or the left A2 only while an operation force is applied, and returns to the neutral position when the operation force is lost. Each of the operators Sw1 to Sw4 as above is operated to the right A1 or the left A2, respectively, and determines the magnitude of the power (the flowrate of the hydraulic oil) output from the corresponding output ports 341 to 344 in accordance with an operation amount (a tilt amount) thereof. Basically, the larger the operation amount of the operators Sw1 to Sw4 becomes, the larger the power output from the corresponding output ports 341 to 344 becomes, respectively, that is, the larger the flowrate of the hydraulic oil increases.

Here, as an example, it is assumed that the operator Sw1 corresponds to the output port 341, the operator Sw2 corresponds to the output port 342, the operator Sw3 corresponds to the output port 343, and the operator Sw4 corresponds to the output port 344. In this case, when the user operates the operator Sw1, the power output from the output port 341 in the drive device 34 is adjusted in accordance with the operation amount of the operator Sw1. On the other hand, when the user operates the operator Sw4, the power output from the output port 344 in the drive device 34 is adjusted in accordance with the operation amount of the operator Sw4. A correspondence relationship between the plurality of output ports 341 to 344 and the plurality of operators Sw1 to Sw4 is defined by "allocation information", which is stored in a memory of the control device 36, for example.

Moreover, in this embodiment, the operator Sw5 is disposed on the rear surface side (back side) of the operation lever 351, and an operator Sw6 is disposed on the rear surface side (back side) of the operation lever 352. The operators Sw5, Sw6 are operators for enabling (turning on) a maintaining function (hold function) of maintaining the output of the drive device 34. That is, the operators Sw5, Sw6 include "maintaining operators" for maintaining the output of the drive device 34. In this embodiment, as one example, each of the operators Sw5, Sw6 includes a momentary type push-button switch. Therefore, when the user presses the operators Sw5, Sw6, it enables the maintaining function, whereby the output of the drive device 34 is maintained (held).

In particular, in this embodiment, the operator Sw5 provided on the operation lever 351 enables the maintenance function for the output port 341 corresponding to the operator Sw1 provided on the same operation lever 351. On the other hand, the operator Sw6 provided on the operation lever 352 enables the maintaining function for the output port 342 that corresponds to the operator Sw2 provided on the same operation lever 352. Therefore, for example, when the user presses the operator Sw5, it maintains (holds) the output for the output port 341 in the plurality of output ports 341 to 344.

However, not limited to the aforementioned configuration, it is only necessary that each of the operators Sw5, Sw6 corresponds to at least one of the output ports 341 to 344 corresponding to the operators Sw1 to Sw4 provided on the same operation lever 351, 352. Therefore, in the case of the operator Sw5, for example, the maintaining function may be enabled for both of the output ports 341, 344 or may be enabled for the output port 344. Meanwhile, in the case of the operator Sw6, the maintaining function may be enabled for both of the output ports 342 and 343 or may be enabled for the output port 343.

In short, in the work machine 3 according to this embodiment, the drive device 34 operates in response to an operation on the operating device 35 having the plurality of operators Sw1 to Sw6. Here, the plurality of operators Sw1 to Sw6 include adjusting operators (operators Sw1 to Sw4) for an adjustment operation of adjusting the output of the drive device 34 and maintaining operators (operators Sw5, Sw6) for a maintaining operation of maintaining the output of the drive device 34. Moreover, the adjusting operator (operators Sw1 to Sw4) are provided in plural for one operation lever 351 (or operation lever 352).

According to the configuration as above, a plurality of the output ports 341, 344 (or the output ports 342, 343) can be controlled by an operation of the one operation lever 351 (or the operation lever 352). In addition, since the operators Sw5, Sw6 are also provided on the operation levers 351, 352, respectively, the maintaining function can also be enabled by the operation of the one operation lever 351 (or the operation lever 352).

Here, in a case where the adjusting operator (the operators Sw1 to Sw4) and the maintaining operator (the operators Sw5 and Sw6) are operated simultaneously, the work machine 3 maintains the output of the drive device 34 at a value corresponding to the operation amount of the adjusting operator (the operators Sw1 to Sw4). For example, when the user presses the operator Sw5 while operating the operator Sw1, the adjusting operator (operator Sw1) and the maintaining operator (operator Sw5) are operated simultaneously. In this case, the magnitude of the power output from the output port 341 is maintained at a value corresponding to the operation amount of the operator Sw1 at the time when the operator Sw5 was operated.

Meanwhile, when only the maintaining operator (operators Sw5, Sw6) in the adjusting operators (operators Sw1 to Sw4) and the maintaining operators (operators Sw5, Sw6) is operated, the work machine 3 maintains the output of the drive device 34 at a specified value. For example, when the user presses only the operator Sw5, the magnitude of the power output from the output port 341 corresponding to the operator Sw1 is maintained at the specified value set in advance for the output port 341.

Therefore, it is possible to easily switch between maintaining the output of the drive device 34 at an arbitrary value and maintaining the output of the drive device 34 at a specified value, depending on the manner of an operation by the user. Hereinafter, an operating state of the maintaining function when the output of the drive device 34 is maintained at the arbitrary value will be referred to as "arbitrary hold," and the operating state of the maintaining function when the output of drive device 34 is maintained at the specified value will be referred to as "specified-value hold".

Moreover, in this embodiment, as shown in FIG. 3, a display lamp 350 which presents an operating state of the maintaining function is provided on a grip part of each of the operation levers 351 and 352. The display lamp 350 includes a light-emitting element, such as an LED, for example, and presents the operating state of the maintaining function by its light-emitting state (lighting state). As an example, the display lamp 350 is off when the maintaining function is disabled (off), emits light in a first color (yellow, for example) when the operating state of the maintaining function is "arbitrary hold", and emits light in a second color (red, for example) when the operating state of the maintaining function is "specified-value hold". In this embodiment, the display lamp 350 is disposed on the front surface side (front side) of each of the operation levers 351, 352, but it is not intended to be limited to this disposition.

According to this configuration, the user can easily check the operating state of the maintaining function by the operation levers 351, 352 at hand.

Moreover, in this embodiment, the work machine 3 disables (off) the maintaining function when the adjusting operator (operators Sw1 to Sw4) is operated in a state where the maintaining function is enabled. For example, when the user operates the operator Sw1 in a state where the operating state of the maintaining function is "arbitrary hold" and the output port 341 is maintained at an arbitrary value, the maintaining function for the output port 341 is disabled, and the output of the output port 341 changes. Similarly, in a case where the operating state of the maintaining function is "specified-value hold", the maintaining function is disabled (off) when the adjusting operator (operators Sw1 to Sw4) is operated.

According to this configuration, the user can cancel the maintaining of the output of the drive device 34 by a simple operation. However, the condition for disabling the maintaining function is not limited to the operation of the adjusting operators (operators Sw1 to Sw4), and it may be the operation of the maintaining operators (operators Sw5, Sw6) in a state where the maintaining function is enabled or the like, for example.

By the way, the configuration related to the operating device 35 described in this embodiment can be applied to the work machine 3 regardless of the configuration of the display system 10. That is, for example, even if there is no display device 2, the configuration related to the operating device 35 can be applied to the work machine 3.

Moreover, each of the operators Sw1 to Sw4 is not limited to a lever switch but may be a toggle switch, a rocker switch, a rotary switch, a slide switch, an encoder or the like, for example. The operators Sw5, Sw6 are not limited to the push-button switches, either, but may be lever switches, touch sensors or the like, for example. Moreover, the operation levers 351, 352 may be reversed on right and left or may be disposed side by side in a front-back direction or an up-down direction. The number of the operation levers 351, 352 may be one. Furthermore, the disposition of the operators Sw5, Sw6 is not limited to the rear surface sides of the operation levers 351, 352, but may be on the side surfaces or front surface sides of the operation levers 351, 352, for example. Moreover, the operating device 35 may include an operator other than the plurality of operators Sw1 to Sw6 described above on the operation levers 351, 352. Moreover, the display lamp 350 can also be omitted as appropriate.

### [6] Display Control Method

Hereinafter, with reference to FIG. 4 to FIG. 11, one example of a work machine display control method (hereinafter, simply referred to as "display control method") mainly executed by the display control system 1 will be explained. That is, the display control method according to this embodiment is used for the work machine 3 including the work unit 31 and the drive device 34 and includes causing the display device 2 to display the first display screen D11 (processing), which will be explained below.

The display control method according to this embodiment is executed in the display control system 1 mainly configured by a computer system, in other words, this display control method is embodied by a work machine display control program (hereinafter, simply referred to as "display control program"). That is, the display control program according to this embodiment is a computer program for causing one or more processors to execute each processing according to the display control method. The display control program according to this embodiment is a program used in the work machine 3 including the work unit 31 and the drive device 34 and for causing one or more processors to execute displaying of the first display screen D11 (processing), which will be explained, on the display device 2. The display control program as above may be executed in collaboration by the display control system 1 and the display device 2, for example.

Here, the display control system 1 executes each of various type of processing described below according to the display control method when a specific start operation set in advance for causing the display control program to be executed is performed. The start operation is, for example, an activating operation of the engine 37 of the work machine 3 and the like. On the other hand, the display control system 1 ends the various types of processing described below according to the display control method when a specific end operation set in advance is performed. The end operation is, for example, a stop operation of the engine 37 of the work machine 3 and the like.

### Display Screen

Here, first, a configuration of the display screen D1 displayed on the display portion 21 of the display device 2 by the display control method will be explained. In the drawings such as FIG. 4 showing the display screen D1 displayed on the display portion 21 of the display device 2, a one-dot chain line that indicates a region, a lead line, and reference numerals are all given merely for explanation and not actually displayed on the display device 2.

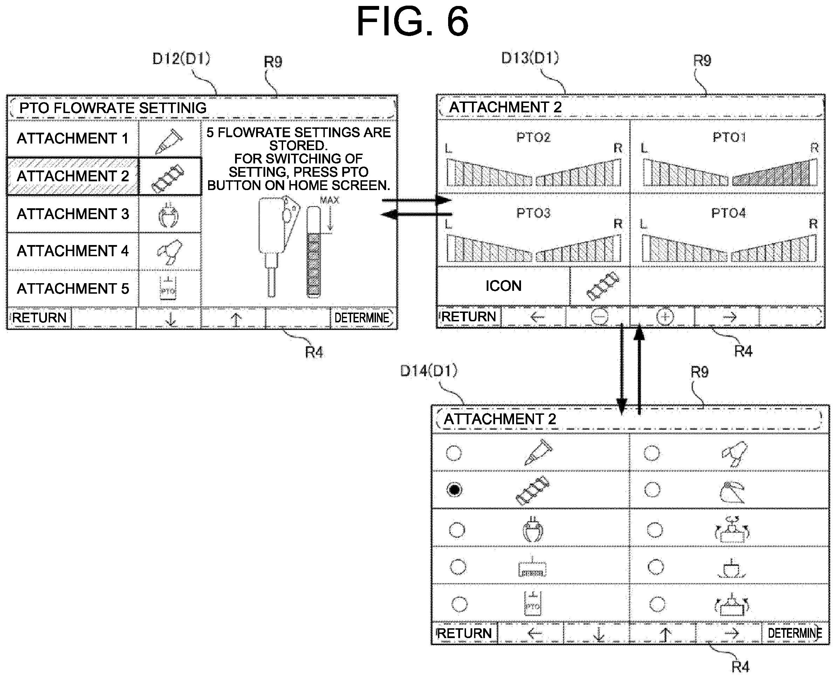

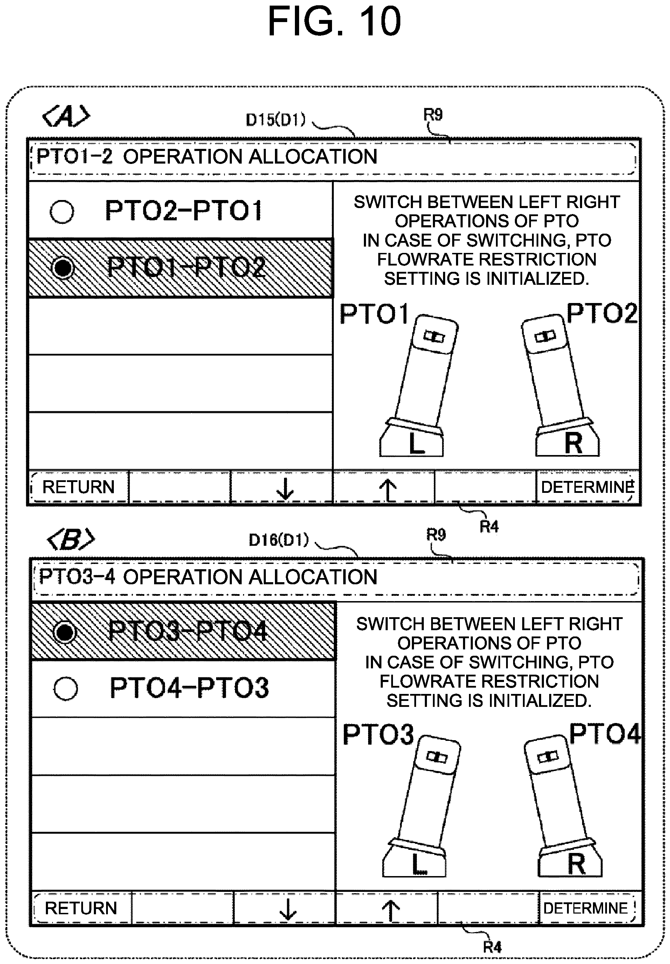

The display screen D1 shown in FIG. 4 is a home screen firstly displayed by the display control method, which is a first display screen D11. The first display screen D11 is a basic display screen D1, which is firstly displayed on the display device 2 during an operation of the work machine 3. The display screen D1 is capable of shifting from the first display screen D11 to various display screens D1 including setting screens D12 to D14 (see FIG. 6), allocation setting screens D15, D16 (see FIG. 10), a menu screen, a crane screen, a mode screen, a camera screen and the like in accordance with an operation on the operation portion 22.

As shown in FIG. 4, the first display screen D11 as the display screen D1 includes a residual-amount display region R1 (first region) and a switching display region R2 (second region). The first display screen D11 further includes a third region R3, a fourth region R4, a fifth region R5, a sixth region R6, a seventh region R7, an eighth region R8, a ninth region R9, and a tenth region R10.

Specifically, the first display screen D11 is divided vertically (up-down direction) into four regions. Then, each of three regions from the top is further divided in a lateral direction (left-right direction) into three regions. As a result, the first display screen D11 is divided into ten regions in total. Moreover, the regions on the second stage from the top include, in a sequential order from the left, the residual-amount display region R1, the switching display region R2, and the third region R3. The region on the lowest stage is the fourth region R4. Moreover, the regions on the third stage from the top include, in a sequential order from the left, the fifth region R5, the sixth region R6, and the seventh region R7, and the regions on the top stage include, in a sequential order from the left, the eighth region R8, the ninth region R9, and the tenth region R10. Regarding a size in the vertical direction, among the four regions divided in the vertical direction, the regions on the second stage from the top (the residual-amount display region R1, the switching display region R2, and the third region R3) are the largest. Regarding a size in the lateral direction, among the three regions divided in the lateral direction, the regions at a center (the switching display region R2, the sixth region R6, and the ninth region R9) are the largest.

However, the disposition and the size of each of these regions are merely an example and can be changed as appropriate. Moreover, it is not indispensable that each of the regions is clearly divided by boundary lines. For example, in an example in FIG. 4, the switching display region R2 and the third region R3 are clearly divided by a boundary line, while there is no boundary line between the residual-amount display region R1 and the switching display region R2. It is needless to say that the residual-amount display region R1 and the switching display region R2 may be clearly divided by a boundary line.

The residual-amount display region R1 is a region having a rectangular shape that is longer in the vertical direction. On the residual-amount display region R1, residual amount information G1 related to a residual amount of a monitoring target is displayed. Here, the monitoring target is an object (including a liquid and a gas) that is consumed with the operation of the work machine 3. In this embodiment, as one example, the monitoring target includes fuel of the engine 37 (light oil, for example). That is, on the residual-amount display region R1, the residual amount information G1 related to a residual amount of the fuel is displayed.

The switching display region R2 is a region having a rectangular shape that is longer in the lateral direction. On the switching display region R2, display target information is displayed. Here, the display target information is information selected capable of being switched from a plurality of pieces of information including at least first information and second information related to the work machine 3. In an example of FIG. 4, in the switching display region R2, cooling-water temperature information G3 and hydraulic-oil temperature information G2 are displayed. The cooling-water temperature information G3 and the hydraulic-oil temperature information G2 are the first information related to the work machine 3. That is, the first display screen D11 shown in FIG. 4 is the display screen D1 in a state in which the first information (the cooling-water temperature information G3 and the hydraulic-oil temperature information G2) is displayed as the display target information on the switching display region R2. The cooling-water temperature information G3 and the hydraulic-oil temperature information G2 are both information related to the work machine 3 and especially information related to the operating state of the work machine 3.

By the way, the display target information displayed on the switching display region R2 is information selected capable of being switched from a plurality of pieces of information including the first information and the second information and is not limited to the aforementioned first information (the cooling-water temperature information G3 and the hydraulic-oil temperature information G2). That is, the second information which is information different from the first information and is related to the work machine 3 can be displayed on the switching display region R2 instead of the first information. In this embodiment, as an example of the second information, a peripheral image and the like of the work machine 3 taken by a camera is shown. As described above, when the display target information displayed on the switching display region R2 is switched between a plurality of pieces of information including the first information and the second information, for example, information that is needed by a user can be displayed with priority on the first display screen D11 depending on the situation at that time.

The third region R3 is a region having a rectangular shape that is longer in the vertical direction. In the third region R3, pictograms (icons) Im1 corresponding to operating states of respective parts of the work machine 3 are displayed. In the third region R3, a plurality of the pictograms Im1 can be displayed, and a design (pattern) of each of the pictograms Im1 indicates which state of a battery, a seat belt, a cooling water temperature, a hydraulic oil temperature and the like is indicated, for example. Here, each of the pictograms Im1 indicates the operation state by a display mode such as a display color, a size and the like, for example. The display processing unit 13 uses outputs of various sensors that detect an operation state of each part of the work machine 3 and determines the state of each part of the work machine 3. Then, when an abnormal value is detected in any part, the display processing unit 13 presents a warning display by changing the display mode such as the display color or the like of the image Im1 of the part thereof.

The fourth region R4 is a band-shaped region that extends over the entire width of the display screen D1. In the fourth region R4, items for operation of the display screen D1 are shown. In FIG. 4, as one example, six items of "MENU," "CRANE," "MODE," "CAMERA," "PTO," and "SWITCHING" are aligned and disposed in this order from the left in the fourth region R4. With these six items, six push-button switches 221 to 226 of the operation portion 22 located immediately below them are associated. For example, with the item of "MENU", the push-button switch 221 is associated, and with the item of "CRANE", the push-button switch 222 is associated, respectively. Therefore, when the push-button switch 224 corresponding to the item of "CAMERA" is operated by a user U1 (see FIG. 2), for example, the item of "CAMERA" is operated (selected).

Moreover, in this embodiment, in the fourth region R4, any one of the items is highlighted so that it corresponds to an operation of an operation dial (or a cursor key) and the like of the operation portion 22. In the example shown in FIG. 4, the item of "MENU" is highlighted, and the item which is highlighted is switched by an operation of the operation dial (or a cursor key) and the like. The user U1 can select a desired item by operating a determination button in a state where the desired item is highlighted. Therefore, for example, when the determination button is operated in a state where the highlighted display has been moved to the item of "CAMERA", the item of "CAMERA" is operated (selected). Moreover, when the operation portion 22 includes a touch panel, the user U1 can select a desired item by an operation of touching the desired item on the display screen D1.

In the fifth region R5, for example, when an abnormal value is detected for information related to the operating state of the work machine 3 such as the cooling water temperature, the hydraulic-oil temperature or the like, indication information (an icon or the like) indicating the gist (abnormality) is displayed. As one example, when a normal value of the cooling water temperature is defined as a range from 30 degrees Celsius or more and less than 110 degrees Celsius, when the cooling water temperature becomes less than 30 degrees Celsius or 110 degrees Celsius or more, the display processing unit 13 detects an abnormal value of the cooling water temperature and displays the indication information in the fifth region R5.

In the sixth region R6, for example, information related to the work unit 31 during an operation in the work machine 3 is displayed. Specifically, information such as an operation pattern of the operating device 35 (the operation levers 351, 352) for controlling the work unit 31 and the like is displayed in the sixth region R6. In the seventh region R7, for example, information related to an operating state of the work machine 3 such as a rotation number and the like of the engine 37 is displayed. In the eighth region R8, for example, a current time is displayed. In the ninth region R9, for example, information indicating items to which the currently displayed display screen D1 belongs is displayed. In the tenth region R10, for example, information related to operation hours of the work machine 3 is displayed (hour meter).

By the way, in this embodiment, the first display screen D11 includes at least drive information related to the drive device 34. In the example in FIG. 4, the drive information is disposed in the sixth region R6. In FIG. 4, a partially enlarged view of the sixth region R6 in the first display screen D11 is shown in a balloon.

That is, in this embodiment, as an example, the first display screen D11 includes three pieces of drive information C1, C2, C3 in the sixth region R6. Each of the drive information C1, C2, C3 is information related to the drive device 34. In the example in FIG. 4, these three pieces of drive information C1, C2, C3 are disposed in the order of the drive information C1, the drive information C3, and the drive information C2 so as to be aligned from the right.

Here, the drive information C1 and the drive information C2 located on both left and right sides of the drive information C3 are allocation information indicating the correspondence relationship among the plurality of output ports 341 to 344 and the plurality of operators Sw1 to Sw4, respectively.

For example, in the case of the drive information C1, an icon C11 including the letters "PTO1" indicating the output port 341 and an icon C12 including the letter "4" indicating the output port 344 are displayed together with the letter "R" indicating the operation lever 351 on the right side. That is, the drive information C1 indicates that, to the operator Sw1 and the operator Sw4 provided on the operation lever 351 on the right side, the output ports 341, 344 correspond. In particular, in the example in FIG. 4, the icon C11 is drawn as if it is disposed on the front surface side of the icon C12 in an overlapping manner. As a result, the drive information C1 indicates, as the allocation information, that the output port 341 corresponds to the operator Sw1 on the front surface side of the operation lever 351, and the output port 344 corresponds to the operator Sw4 on the rear surface side of the operation lever 351.

On the other hand, in the case of the drive information C2, an icon C21 including the letters "PTO2" indicating the output port 342 and an icon C22 including the letter "3" indicating the output port 343 are displayed together with the letter "L" indicating the operation lever 352 on the left side. That is, the drive information C2 indicates that the operator Sw2 and the operator Sw3 provided on the operation lever 352 on the left side correspond to the output ports 342, 343. In particular, in the example in FIG. 4, the icon C21 is drawn as if it is disposed on the front surface side of the icon C22 in an overlapping manner. As a result, the drive information C2 indicates, as the allocation information, that the output port 342 corresponds to the operator Sw2 on the front surface side of the operation lever 352, and the output port 343 corresponds to the operator Sw3 on the rear surface side of the operation lever 352.

Moreover, the drive information C3 is attachment information which identifies the attachment 311 connected to the drive device 34. In the work machine 3 according to this embodiment, a plurality of (as an example, five at the maximum) attachments 311 can be registered in advance. In the work machine 3, for each of the plurality of registered attachments 311, the output (the specified value or the like) of the drive device 34 can be set in advance for each of the attachments 311. In the example in FIG. 4, as the drive information C3, the letter "2" indicating the registration number of the attachment 311 and an icon C31 indicating the type of the attachment 311 (for example, augers) are displayed. That is, the drive information C3 indicates that the attachment 311 of the type indicated by the icon C31 is connected to the drive device 34.

In short, the display control system 1 according to this embodiment is used for the work machine 3 including the work unit 31 and the drive device 34. The work unit 31 performs a work by driving the attachment 311 attached to the machine body 30 of the work machine 3. The drive device 34 supplies power to the attachment 311 so as to drive the attachment 311. The display control system 1 includes a display processing unit 13 that causes the display device 2 to display the first display screen D11 including drive information C1 to C3 related to the drive device 34.

According to this configuration, information related to the drive device 34 that supplies power to the attachment 311 to drive the attachment 311 is displayed on the first display screen D11. As a result, when the user (operator) operates the work machine 3 to perform the work, the user can visually check the operating state of the drive device 34 and the like, and the operability of the work machine 3 is improved. For example, even a low-skilled operator or the like can accurately and smoothly operate the work machine 3 while visually checking the operating state of the drive device 34 and the like and thus, improvement in efficiency of the work using the work machine 3 is also expected. Therefore, according to the display control system 1 according to this embodiment, there is such a merit that operability of the work machine 3 can be easily improved.

Moreover, in this embodiment, as described above, the outputs of the plurality of output ports 341 to 344 are controlled in accordance with the operation on the operating device 35 having the plurality of operators Sw1 to Sw4. The drive information C1, C2 includes allocation information indicating a correspondence relationship between the plurality of output ports 341 to 344 and the plurality of operators Sw1 to Sw4. Therefore, the user can operate the operators Sw1 to Sw4 corresponding to the desired output ports 341 to 344 while referring to the allocation information displayed on the display device 2, and even when there are a plurality of output ports 341 to 344, the operation of the operating device 35 is simplified.

Moreover, in this embodiment, as described above, the drive information C3 includes attachment information for identifying the attachment 311 connected to the drive device 34. Therefore, the user can operate the work machine 3 while referring to the attachment information displayed on the display device 2, and the operability of the work machine 3 is improved. In particular, in a case where the output of the drive device 34 (a specified value or the like) can be set in advance for each attachment 311, the user can grasp the setting state of the output of the drive device 34 from attachment information. The attachment information may be automatically determined by an output of a sensor or the like that detects the type of the attachment 311 or may be manually input by the user.

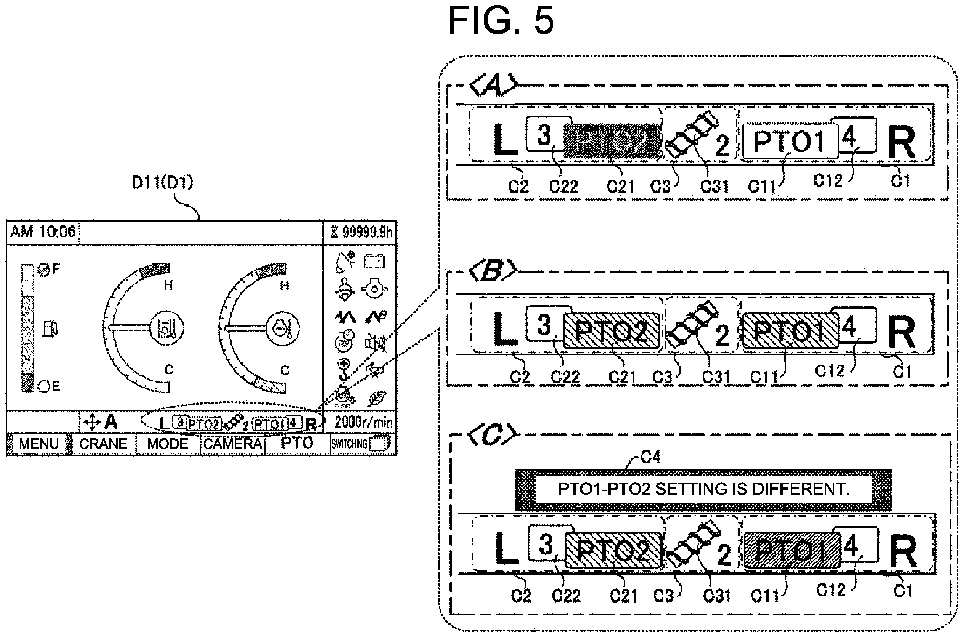

By the way, in this embodiment, as shown in FIG. 5, it is possible to display various types of information related to the drive device 34 other than the allocation information by the display mode of the drive information C1 and C2. FIG. 5 is an enlarged diagram of a part of the sixth region R6 of the first display screen D 11 and illustrates display examples in three patterns of situations <A>, <B>, and <C> in a balloon.

First, <A> in FIG. 5 assumes such a situation that the attachment 311 is not connected to the output port 342 of the drive device 34. In this case, in the drive information C2, the icon C21 representing the output port 342 is grayed out in a light color so as to be distinguished from the other icons C11 and the like. That is, in the first display screen D11, for example, the connection state of the attachment 311 in the drive device 34 (the output port 342) is displayed in the display mode (here, shading) of the icon C21 or the like. In other words, the drive information C1, C2 includes connection information indicating the connection state of the attachment 311 to the drive device 34. As a result, the user can visually check the connection state of the attachment 311 to the drive device 34 (output ports 341 to 344) and thus, an erroneous operation is less likely to occur when operating the drive device 34.

Moreover, <B> in FIG. 5 assumes such a situation that the output port 341 and the output port 342 of the drive device 34 is in the "arbitrary hold" state by the maintaining function. In this case, in the drive information C2, the icon C11 representing the output port 341 and the icon C21 representing the output port 342 are colored in the first color (yellow, for example) corresponding to the "arbitrary hold". That is, in the first display screen D11, for example, the operating state of the maintaining function of maintaining the outputs of the drive device 34 (output ports 341, 342) is displayed in the display mode (here, the display color) of the icon C11 or the like. In other words, the display processing unit 13 displays the operating state of the maintaining function of maintaining the output of the drive device 34 on the first display screen D 11. That is, the operating state of the maintaining function of maintaining the output of the drive device 34 is also included in the drive information C1, C2, similarly to the connection state of the attachment 311 to the drive device 34 and the like. As a result, the user can visually check the operating state of the maintaining function of maintaining the outputs of the drive device 34 (output ports 341 to 344) and thus, an erroneous operation such as unintended disabling of the maintaining function is less likely to occur.

In particular, in this embodiment, the display processing unit 13 displays the operating state of the maintaining function in the display mode of the drive information C1, C2. Therefore, for example, the drive information C1, C2 indicating the allocation information and the like can also be used to display the operating state of the maintaining function, and an amount of information displayed on the first display screen D11 can be kept small. As a result, a relatively simple screen configuration can be realized as the first display screen D11, which leads to an improvement in visibility for the user. Moreover, the display mode of the drive information C1, C2, C3 indicating the operating state and the like of the maintaining function is not limited to the shading and the display color as described above, and may be, for example, display/non-display, a line type, a size, animation and the like, or a combination thereof.

Moreover, <C> in FIG. 5 assumes such a situation that the output port 341 of the drive device 34 is in the "specified-value hold" state and the output port 342 is in the "arbitrary hold" state. In this case, in the drive information C2, the icon C11 representing the output port 341 is colored in the second color (red, for example) corresponding to "specified-value hold". That is, in the first display screen D11, for example, the operating state of the maintaining function (specified-value hold/arbitrary hold) is distinguished by the display mode (here, display color) of the icon C 11 or the like.

Moreover, in the example of <C> in FIG. 5, the display processing unit 13 displays notification information C4 included in the drive information. The notification information C4 is information that is displayed, when the operating states of the plurality of output ports 341 to 344 correspond to a combination of notification targets, and notifies that gist (that it is the combination of notification targets). Here, the "combination of notification targets" is a specific combination set in advance for the combination of the operating states of the plurality of output ports 341 to 344, that is, for example, a combination in which the operating states of the maintaining functions are different and the like. In the example of FIG. 5, since the operating states (specified-value hold/arbitrary hold) of the maintaining function are different between the output port 341 and the output port 342, the display processing unit 13 determines that the operating states of the output ports 341, 342 are a combination of notification targets. In this case, the notification information C4 includes a text, as one example, that "PTO1-PTO2 setting is different " and the like. In short, in this embodiment, when the operating states of the plurality of output ports 341 to 344 are a combination of notification targets, the display processing unit 13 includes the notification information C4 related to the operating states of the plurality of output ports 341 to 344 in the drive information. As a result, the user is less likely to perform an erroneous operation when operating the plurality of output ports 341 to 344 in combination.

By the way, as shown in FIG. 6, the display processing unit 13 shifts the display screen D1 displayed on the display device 2 from the first display screen D11 to another screen (setting screens D12 to D14 and the like) in accordance with an operation of a user.

Here, as one example, the first display screen D11 is firstly displayed on the display portion 21 of the display device 2 by a start operation. Then, in a state where the first display screen D11 is displayed, when "PTO flowrate setting" is selected after the item of "MENU" is operated (selected) by the operation of the push-button switch 221 corresponding to the item of "MENU" or the like, the setting screen D12 is displayed. When any one of the items "attachment 1" to "attachment 5" is operated (selected) in a state where the setting screen D12 is displayed, the setting screen D12 shifts to the setting screen D13. Moreover, when the item of "attachment" is operated (selected) in a state where the setting screen D13 is displayed, the setting screen D13 shifts to the setting screen D14. Moreover, in the setting screens D13, D14, when the item of "return" or "determine" in the fourth region R4 is operated (selected), the screen shifts to the previous setting screens D12, D13. However, the operation for the shifting of the display screen D1 and an order of the shifting and the like are not limited to the aforementioned example, but can be changed as appropriate.

According to the setting screens D12 to D14 which are hierarchized as above, it is possible to register a plurality of (as an example, five at the maximum) attachments 311 and to set the outputs (specified values or the like) of the drive device 34 for each of the plurality of registered attachments 311. Specifically, the user selects the registration number of the arbitrary attachment 311 by operating the item of the cursor in the fourth region R4 on the setting screen D12. Then, the user operates the item " + " or "-" in the fourth region R4 on the setting screen D13 to individually set the specified values (maximum flowrates) for each of the output ports 341 to 344 ("PTO1" to "PTO4"). Moreover, when the icon of the attachment 311 is to be set, the user selects an icon of the arbitrary attachment 311 on the setting screen D14.

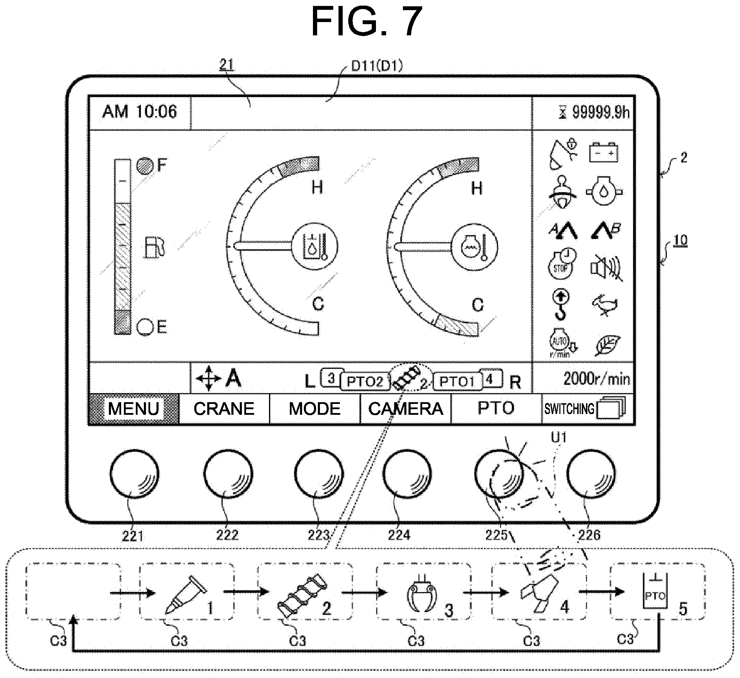

The setting of the outputs (specified values or the like) of the drive device 34 for each of the attachments 311 registered on the setting screens D12 to D14 can be called by selecting the attachment 311 on the first display screen D11. Specifically, as shown in FIG. 7, when the item of "PTO" is operated (selected) by the user U1 operating the push-button switch 225 corresponding to the item of "PTO" in a state where the first display screen D11 is displayed or the like, the selected attachment 311 is switched. Here, as one example, as shown in a balloon of FIG. 7, the icon C1 and the registration number of the selected attachment 311 are displayed as the drive information C3, and the selected attachment 311 is switched every time the item "PTO" is operated. Therefore, the user can check the setting of the current the specified value or the like) of the drive device 34 in the drive information C3 on the first display screen D11.

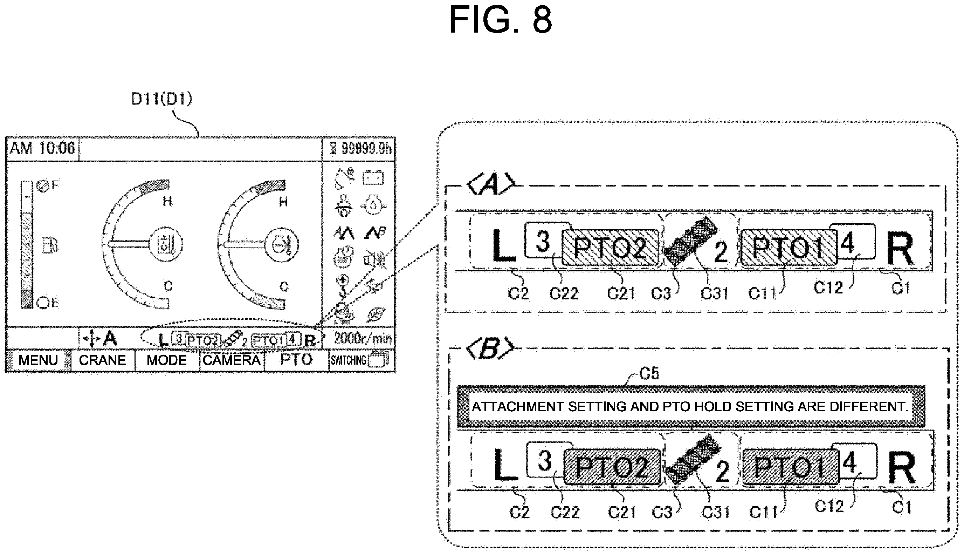

Moreover, in this embodiment, as shown in FIG. 8, the display processing unit 13 has a function of displaying the attachment information in a display mode according to the drive characteristics of the attachment 311 by the drive device 34. That is, depending on the type of the attachment 311, the drive characteristics of the drive device 34, for example, the frequently used maintaining function, are different. As an example, the "arbitrary hold" is frequently used for the attachment 311 such as a crusher, a mulcher, a tilt rotator and the like, and the "specified-value hold" is frequently used for the attachment 311 such as a breaker, a damper, an auger and the like, capable of repetitive operations. Thus, the display processing unit 13 changes the display mode of the attachment information in accordance with the respective drive characteristics. FIG. 8 is an enlarged diagram of a part of the sixth region R6 of the first display screen D11 and illustrates a display example in two patterns of situations of <A> and <B> in a balloon.

In <A> in FIG. 8, such a situation is assumed that the output ports 341, 342 of the drive device 34 are in the state of the "specified-value hold" by the maintaining function, and an auger for which the "specified-value hold" is frequently used is selected as the attachment 311. In this case, in the drive information C2, the icon C11 representing the output port 341 and the icon C21 representing the output port 342 are colored in the second color (red, for example) corresponding to the "specified-value hold". In addition, the icon C31 of the drive information C3 representing the attachment 311 is colored in the second color (red, for example) corresponding to the "specified-value hold". As a result, the user can visually check the relationship between the operating state of the drive device 34 (the operating state of the maintaining function) and the drive characteristic of the selected attachment 311 and thus, an erroneous operation is less likely to occur.

Moreover, <B> in FIG. 8 assumes such a situation that the output ports 341, 342 of the drive device 34 are in the state of the "arbitrary hold", and an auger for which the "specified-value hold" is frequently used is selected as the attachment 311. In this case, in the drive information C2, the icon C11 representing the output port 341 and the icon C21 representing the output port 342 are colored in the first color (yellow, for example) corresponding to the "arbitrary hold". On the other hand, the icon C31 of the drive information C3 representing the attachment 311 is colored in the second color (red, for example) corresponding to the "specified-value hold". As a result, the user can visually check the relationship between the operating state of the drive device 34 (the operating state of the maintaining function) and the drive characteristic of the selected attachment 311 and thus, an erroneous operation is less likely to occur.

Moreover, in the example in <B> in FIG. 8, the display processing unit 13 displays caution information C5 included in the drive information. The caution information C5 is information displayed when the operating state of the drive device 34 and the drive characteristic of the attachment 311 correspond to a combination of caution targets for notifying that gist (that it is the combination of caution targets). Here, the "combination of caution targets" is a specific combination set in advance for the combination of the operating state of the drive device 34 and the drive characteristic of the attachment 311 such as a combination in which the operating states of the maintaining functions are different and the like, for example. In the example in FIG. 8, the display processing unit 13 determines that the combination is the combination of caution targets since the operating state (specified-value hold/arbitrary hold) of the maintaining function is different between the drive characteristics of the drive device 34 and the attachment 311. In this case, the caution information C5 includes a text, as one example, that "The attachment setting and the PTO hold setting are different " and the like. When the operating states of the maintaining functions of the output port 341 and the output port 342 are different, whether it is a combination of the caution targets or not is determined on the basis of the operating state of the maintaining function of either one of the output ports 341 and 342 having a higher use frequency during the work.

In short, in this embodiment, the display processing unit 13 includes the caution information C5 in the drive information when the operating state of the drive device 34 and the drive characteristics of the attachment 311 connected to the drive device 34 by the drive device 34 are a combination of caution targets. As a result, the user can easily operate the drive device 34 in accordance with the drive characteristics of the attachment 311, and an erroneous operation is less likely to occur.

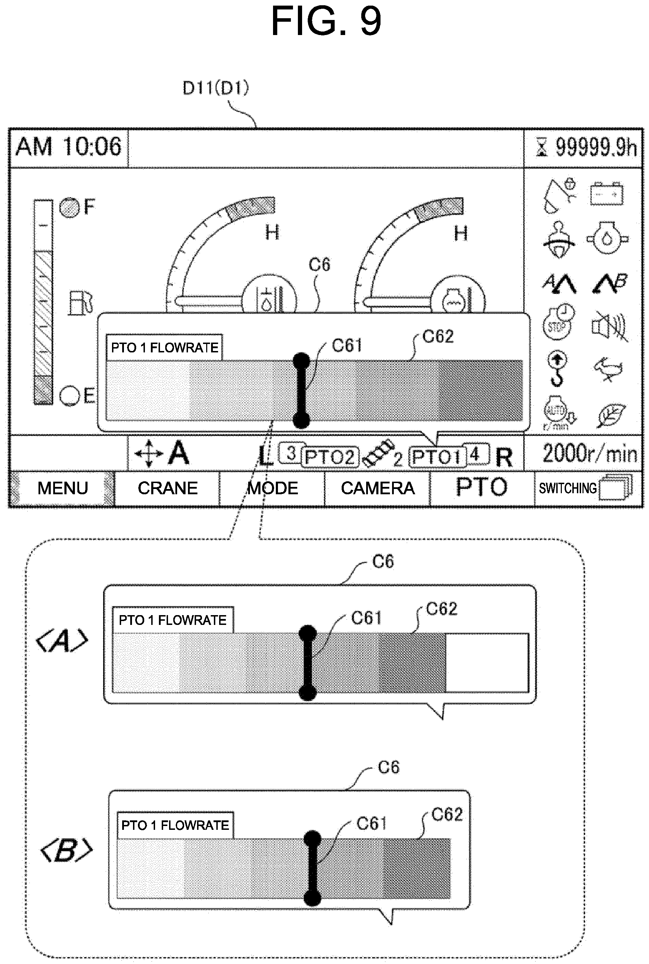

Moreover, in this embodiment, as shown in FIG. 9, a specified value can be set for the output of the drive device 34, and the drive information includes relative information C6 representing the current output value of the drive device 34 relative to the specified value. In FIG. 9, the relative information C6 includes a slider C61 and a bar graph C62, and a position of the slider C61 with respect to the bar graph C62 represents the current output value of the drive device 34. That is, a length in the left-right direction of the bar graph C62 represents the specified value, and as the slider C61 moves in the left-right direction on the bar graph C62 in accordance with the current output value of the drive device 34, the current output value of the drive device 34 is represented with relative to the specified value. For example, when the operator Sw1, which is an "adjusting operator", is operated and the output of the output port 341 increases, the slider C61 moves to the right, and conversely, when the output of the output port 341 decreases, the slider C61 moves to the left. Here, as one example, the relative information C6 is displayed as a pop-up on the first display screen D11.

In FIG. 9, by assuming such a situation that the specified value of the output port 341 is set to 80%, variations <A> and <B> of the relative information C6 are shown in a balloon. In the example of <A> in FIG. 9, the length of the colored part of the bar graph C62 is adjusted in accordance with the specified value (80%), and in the example of <B> in FIG. 9, the entire length of the bar graph C62 is adjusted in accordance with the specified value (80%). In any relative information C6, the position of the slider C61 with respect to the bar graph C62 represents the current output value of the drive device 34 with relative to the specified value.

Moreover, in this embodiment, as shown in FIG. 10, the display processing unit 13 has a function of causing the display device 2 to display allocation setting screens D15 and D16 on which the correspondence relationship between the plurality of output ports 341 to 344 and the plurality of operators Sw1 to Sw4 can be set. The correspondence relationship between the plurality of output ports 341 to 344 and the plurality of operators Sw1 to Sw4 set on the allocation setting screens D15 and D16 is reflected on the first display screen D11. As a result, while visually checking by the display device 2, the user can determine the correspondence relationship between the plurality of output ports 341 to 344 and the plurality of operators Sw1 to Sw4.

As one example, the allocation setting screen D15 shown in <A> in FIG. 10 is a screen for setting the correspondence relationship between the plurality of output ports 341, 342 and the plurality of operators Sw1, Sw2. That is, arbitrary setting is selected from "PTO2-PTO1" and "PTO1-PTO2" by operating the item of the cursor in the fourth region R4 on the allocation setting screen D15. When the item of determination in the fourth region R4 is selected in a state where "PTO1-PTO2" is selected, the output port 341 (PTO1) is associated with the operator Sw2 of the operation lever 352, and the output port 342 (PTO2) is associated with the operator Sw1 of the operation lever 351, respectively. Similarly, the allocation setting screen D16 shown in <B> in FIG. 10 is a screen for setting the correspondence relationship between the plurality of output ports 343, 344 and the plurality of operators Sw3, Sw4. When the correspondence relationship between the plurality of output ports 341 to 344 and the plurality of operators Sw1 to Sw4 is changed on the allocation setting screens D15, D16, the setting of the specified value (flowrate restriction) for the changed output ports 341 to 344 is initialized.

The setting screens D12 to D14 and the allocation setting screens D15, and D16 as described above are all screens for making setting related to the drive device 34 and are a type of "second display screens". On the other hand, the first display screen D11 is a home screen, which is a screen before the shift to the setting screens D12 to D14 or the allocation setting screens D15, D16. That is, the first display screen D11 is a screen different from the second display screens (the setting screens D12 to D14, the allocation setting screens D15, D16 and the like) for making the setting related to the drive device 34.

### Overall Processing

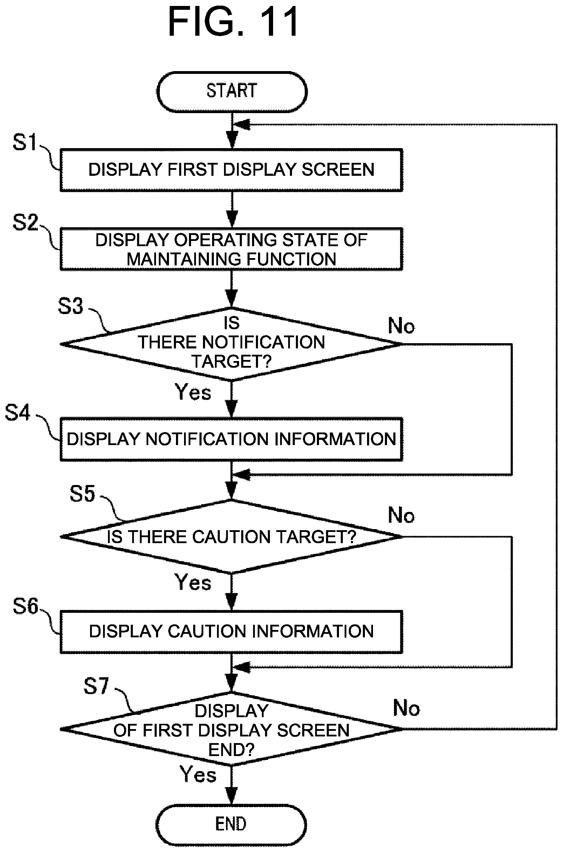

Subsequently, a flow of overall processing according to the display control method will be described with reference to FIG. 11. FIG. 11 is a flowchart illustrating one example of processing according to the display control method.

As shown in FIG. 11, the display processing unit 13 of the display control system 1 firstly displays the first display screen D11 including the drive information C1, C2, C3 and the like related to the drive device 34 on the display device 2 (S1). Here, if the maintaining function is enabled (ON) for any of the plurality of output ports 341 to 344 in the drive device 34, the display processing unit 13 displays the operating state (arbitrary hold/specified-value hold) of the maintaining function on the first display screen D11 (S2). Specifically, the display processing unit 13 displays the operating state of the maintaining function in a display mode (display color, for example) of the drive information C1, C2. At this time, when the display processing unit 13 displays the operating state of the maintaining function, the display control system 1 uses the data acquired by the data acquiring portion 11.

In this state, the display processing unit 13 determines whether or not there is a notification target for the combination of the operating states of the plurality of output ports 341 to 344 (S3). For example, when it is determined that there is a notification target (S3: Yes) due to a difference in the operating state (specified-value hold/arbitrary hold) of the maintaining function between the output port 341 and the output port 342, the display processing unit 13 displays the notification information C4 (S4). On the other hand, when there is no notification target (S3: No), the display processing unit 13 skips the processing S4 and proceeds to the processing S5.

At the processing S5, the display processing unit 13 determines whether or not there is a caution target for a combination of the operating state of the drive device 34 and the drive characteristic of the attachment 311. For example, when it is determined that there is a caution target (S5: Yes) due to a difference in the operating state (specified-value hold/arbitrary hold) of the maintaining function between the drive characteristics of the drive device 34 and the attachment 311, the display processing unit 13 displays the caution information C5 (S6). On the other hand, when there is no caution target (S5: No), the display processing unit 13 skips the processing S6 and proceeds to the processing S7.

Then, the display processing unit 13 monitors whether an operation to end displaying of the first display screen D11, that is, a stop operation of the engine 37 of the work machine 3 or the like is performed or not while displaying of the first display screen D11 (S7). If the operation to end the displaying is not performed (S7: No), the display processing unit 13 returns to the processing S1 and continues the displaying of the first display screen D11. When the operation to end the displaying is performed (S7: Yes), the display processing unit 13 ends the series of processing.

Note that the flowchart shown in FIG. 11 is merely an example and a processing may be added or omitted as appropriate, or an order of the processing may be switched as appropriate.

### [7. Variation]

Hereinafter, variations of the embodiment 1 will be listed. The variations explained below can be applied in combination as appropriate.

The display control system 1 according to this disclosure includes a computer system. The computer system is mainly configured by one or more processors and one or more memories as hardware. When the processor executes a program stored in the memory of the computer system, the function as the display control system 1 according to this disclosure is realized. The program may be stored in the memory of the computer system in advance, may be provided via an electric communication line, or may be provided by being recorded in a non-temporary recording medium such as a memory card, an optical disk, and a hard disk drive and the like that are readable by the computer system. Moreover, some or all of the functional portions included in the display control system 1 may be configured by an electronic circuit.

Moreover, it is not an indispensable configuration for the display control system 1 that at least some of the functions of the display system 10 are aggregated in one single housing, but the constituent component of the display system 10 may be provided in a plurality of housings in a distributed manner. On the contrary, in the embodiment 1, the functions of the display system 10 and the like distributed in a plurality of devices may be aggregated in one single housing. Moreover, at least some of the functions of the display control system 1 may be realized by a cloud (cloud computing) and the like.

Moreover, a power source of the work machine 3 is not limited to a diesel engine but may be an engine other than a diesel engine, or may be a motor (electric motor) or a hybrid-type power source including an engine and a motor (electric motor), for example. When the power source includes an electric motor such as a motor, the power source is driven by consuming electric energy accumulated in a battery in addition to or instead of a fuel (light oil or gasoline and the like). In this case, for example, a State Of Charge (SOC) and the like corresponding to a residual amount of the battery may be displayed on the display screen D1 as residual-amount information G1.

Moreover, the drive device 34 is not limited to a device such as a PTO for taking out power from the engine 37 (as power for driving the attachment 311) but may be a device that outputs power for driving the attachment 311 separately from the engine 37. Moreover, the drive device 34 is not limited to the device that supplies power to the attachment 311 by supplying hydraulic oil, but may be a device that generates power by an electric motor such as a motor. In this case, the power output from the drive device 34 is controlled by, for example, an electric current or the like flowing through the drive device 34.

Moreover, the attachment 311 only needs to be attached to the machine body 30, and it is not indispensable that the attachment 311 is detachably attached to the machine body 30. Moreover, a plurality of attachments 311 may be attached to the machine body 30 at the same time.

Moreover, when the operating state of the maintaining function of maintaining the output of the drive device 34 is displayed on the first display screen D11, it is not an indispensable configuration of the display control system 1 to display the operating state of the maintaining function in the display mode of the drive information C1, C2. For example, the operating state of the maintaining function may be displayed by a text such as "arbitrary hold in progress" or "specified-value hold in progress", a pictogram (icon) representing "arbitrary hold" or "specified-value hold" or the like.

Moreover, the display device 2 is not limited to a dedicated device but may be a general-purpose terminal such as a laptop computer, a tablet terminal, a smart phone or the like, for example. Furthermore, the display portion 21 is not limited to a mode that directly displays the display screen D1 such as a liquid crystal display or an organic EL display but may be configured to display the display screen D1 by projection such as a projector, for example. The display region of the display portion 21 is not limited to a laterally longer one but may be vertically longer one.

Moreover, as a mode for inputting information of the operation portion 22, a mode other than the push-button switches 221 to 226, a touch panel and an operation dial may be adopted. For example, the operation portion 22 may adopt a mode such as a keyboard, a pointing device such as a mouse, a voice input, a gesture input, an input of an operating signal from another terminal and the like.

Moreover, the first information displayed on the switching display region R2 is not limited to the cooling-water temperature information G3 and the hydraulic-oil temperature information G2. As one example, the first information may be only either one of the cooling-water temperature information G3 and the hydraulic-oil temperature information G2, or may include information related to the work unit 31 in operation such as the information displayed on the sixth region R6.

### (Embodiment 2)

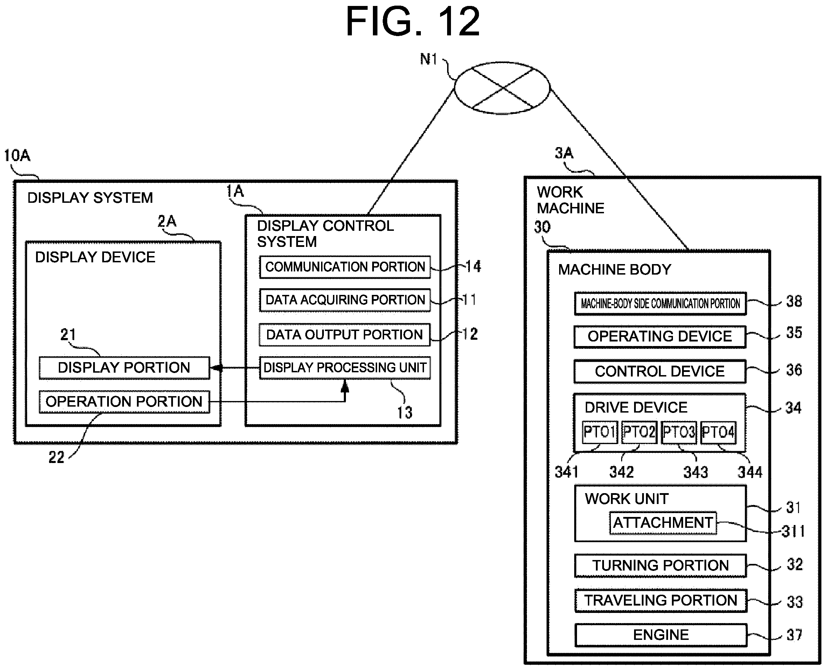

A display system 10A according to this embodiment is, as shown in FIG. 12, different from the display system 10 according to the embodiment 1 in a point that the display system 10A is provided separately from the machine body 30 of a work machine 3A. Hereinafter, a configuration similar to that of the embodiment 1 is given common reference numeral, and explanation thereof will be omitted as appropriate.

In this embodiment, as one example, the work machine 3A operates by an automatic drive (conducts autonomous traveling). Specifically, the work machine 3A includes, for example, a position detection portion that detects a position (latitude and longitude) of the machine body 30 by using a satellite positioning system such as Global Navigation Satellite System (GNSS) and an attitude detection portion that detects an attitude of the work machine 3A and the like.

The display system 10A including a display control system 1A and a display device 2A is realized by a tablet terminal and the like disposed on an outer side of the work machine 3A. In this embodiment, the display control system 1A includes a communication portion 14. The machine body 30 of the work machine 3A includes a machine-body side communication portion 38. The communication portion 14 and the machine-body side communication portion 38 are configured communicable with each other via a communication network N1 such as the Internet and the like.

According to the configuration as described above, even in the case of the display system 10A provided separately from the machine body 30 of the work machine 3A, the display system 10A can cause the display device 2A to display the display screen D1 similar to that of the embodiment 1 by communicating with the machine body 30.

As a variation of this embodiment, the work machine 3A is not limited to the configuration operated by the automatic drive but may be operated by remote control by a user (operator). In this case, the user remotely controls the work machine 3A while seeing the display screen D1 displayed on the display device 2A.

The configuration according to the embodiment 2 (including the variation) can be employed in combination with various configurations (including the variation) as appropriate explained in the embodiment 1.

## Claims

1. A work machine display control system used in a work machine including work unit that performs a work by driving an attachment attached to a machine body of the work machine; and a drive device that drives the attachment by supplying power to the attachment, comprising: a display processing unit that causes a display device to display a first display screen including drive information related to the drive device.

2. The work machine display control system according to claim 1, wherein the display processing unit displays an operating state of a maintaining function of maintaining an output of the drive device on the first display screen.

3. The work machine display control system according to claim 2, wherein the display processing unit displays an operating state of the maintaining function in a display mode of the drive information.

4. The work machine display control system according to any one of claims 1 to 3, wherein the drive device has a plurality of output ports, each outputting power, outputs of the plurality of output ports are controlled in accordance with an operation on an operating device including a plurality of operators, and the drive information includes allocation information indicating a correspondence relationship between the plurality of output ports and the plurality of operators.

5. The work machine display control system according to claim 4, wherein the display processing unit causes the display device to display an allocation setting screen on which a correspondence relationship between the plurality of output ports and the plurality of operators can be set.

6. The work machine display control system according to any one of claims 1 to 5, wherein the drive information includes connection information indicating a connection state of the attachment to the drive device.

7. The work machine display control system according to any one of claims 1 to 6, wherein a specified value can be set for an output of the drive device, and the drive information includes relative information representing a current output value of the drive device relative to the specified value.

8. The work machine display control system according to any one of claims 1 to 7, wherein the drive device has a plurality of output ports, each outputting power, and when operating states of the plurality of output ports are a combination of notification targets, the display processing unit includes notification information related to the operating states of the plurality of output ports in the drive information.

9. The work machine display control system according to any one of claims 1 to 8, wherein the drive information includes attachment information for identifying the attachment connected to the drive device.

10. The work machine display control system according to claim 9, wherein the display processing unit displays the attachment information in a display mode corresponding to a drive characteristic of the attachment by the drive device.

11. The work machine display control system according to any one of claims 1 to 10, wherein the display processing unit includes caution information in the drive information when an operating state of the drive device and a drive characteristic of the attachment connected to the drive device by the drive device are a combination of caution targets.

12. The work machine display control system according to any one of claims 1 to 11, wherein the first display screen is a screen different from a second display screen for performing setting related to the drive device.

13. The work machine display control system according to any one of claims 1 to 12, wherein the drive device operates in response to an operation on an operating device having a plurality of operators, and the plurality of operators include an adjusting operator for an adjustment operation of adjusting an output of the drive device and a maintaining operator for a maintenance operation of maintaining the output of the drive device.

14. A work machine display system comprising: the work machine display control system according to any one of claims 1 to 13; and the display device that displays the first display screen.

15. A work machine comprising: the work machine display system according to claim 14; and the machine body on which the display device is mounted.

16. A work machine display control method used for a work machine including a work unit that performs a work by driving an attachment attached to a machine body of the work machine; and a drive device that drives the attachment by supplying power to the attachment, the work machine display control method comprising: causing a display device to display a first display screen including drive information related to the drive device.

17. A work machine display control program used in a work machine including a work unit that performs a work by driving an attachment attached to a machine body of the work machine; and a drive device that drives the attachment by supplying power to the attachment, wherein one or more processors cause a display device to display a first display screen including drive information related to the drive device.
